# EUROPEAN PATENT SPECIFICATION

(11) **EP 2 936 336 B1**
(45) Date of publication and mention of the grant of the patent: **03.07.2019**
(21) Application number: 13865883.6
(22) Date of filing: 17.12.2013
(51) Int. Cl.: G06F 16/958, G06F 17/22

(54) **METHOD AND APPARATUS FOR METADATA DIRECTED DYNAMIC AND PERSONAL DATA CURATION**
VERFAHREN UND VORRICHTUNG FÜR AUF METADATEN AUSGERICHTETE PFLEGE VON DYNAMISCHEN UND PERSÖNLICHEN DATEN
PROCÉDÉ ET APPAREIL POUR LA RÉCUPÉRATION DE DONNÉES DYNAMIQUES ET PERSONNELLES ORIENTÉES SUR LES MÉTADONNÉES

(30) Priority: 20.12.2012 US 201213722286
(43) Date of publication of application: 28.10.2015
(73) Proprietor: Intel Corporation, Santa Clara, CA 95054 (US)
(72) Inventor: MO, Stanley, Portland, OR 97229 (US); SZILAGYI, Victor, London N7 9JN (GB); SCHROEDER, Shannon R., Hillsboro, OR 97123 (US); WOUHAYBI, Rita, H., Portland, OR 97229 (US)
(74) Representative: Rummler, Felix
(86) International application number: PCT/US2013/075853
(87) International publication number: WO 2014/100033

(56) References cited:
- US-A1- 2002 054 090
- US-A1- 2006 161 843
- US-A1- 2009 144 321
- US-A1- 2009 171 995
- US-A1- 2009 172 154
- US-A1- 2011 041 090
- US-A1- 2012 226 818

## Description

### Technical Field

The present disclosure relates generally to the field of Web based content presentation creation and viewing and, more specifically, to dynamic modification and curation of the Web based content using metadata.

### BACKGROUND

Various mechanisms exist for viewing digital content created and posted on the World Wide Web or other accessible location. Most Web content contains links to other content, for instance, text, images, further hyperlinks, audio, video, multi-media content, etc. The authors have no control over broken links, e.g., missing, blocked, corrupted or changed data for content posted by others. Thus, when viewing the content, or story, a viewer may frequently encounter missing, corrupted or changed elements from the original story. Further, the content may be especially relevant to a geographic area or demographic and not be applicable to a viewer in another geographical area or demographic, or be relevant in another location in a way not captured by the original content presentation.

Content creation and curation, today, is a laborious process of seeking out and assembling content to communicate a story or message. For consumers, this story is one which might accompany a television show as an Internet-based second screen event or for a musical event. After the content is generated, it is now a static story. Sent to someone in another country, the static content has no cultural or geographical cues which would allow the presentation to become more relevant and impactful to that new viewer. Or when the static content is seen some months or years after creation, that content would likely consist of broken links and important ideas communicated with examples which are no longer current or which may have changed as definitions of terms, images and ideas have evolved with language and new current events that reshape meanings.

US 2002 054090 A1 relates to creation and providing for personalized access to web content and services from terminals having diverse capabilities. According to its disclosure an end-user is able to create and maintain a personalized Web view of one or more Web sites, which is customized suitably for presentation on specific types of devices, for example devices which may have limited bandwidth and high latency, that will be used to access the Web view. According to the disclosure, a smart bookmark recording applet records each of the user's navigation actions as he browses to the final page containing the information to be clipped for the personalized Web view. The user then selects the components of interest on the final page and that are suitable for display on one or more specified types of devices. Next the selected components are extracted using extraction expression. A Web view specification comprising the smart bookmark to access the final page and the extraction expressions that are associated with one or more specified diverse types of devices are uploaded to a Web view server for later replay through one or more of these specified types of devices.

### SUMMARY OF THE INVENTION

The present invention is defined by the features of the independent claims. Preferred embodiments are defined by the features of the dependent claims.

### BRIEF DESCRIPTION OF THE DRAWINGS

The features and advantages of embodiments disclosed herein will become readily understood by the following detailed description, in conjunction with the accompanying drawings. Like numerals having different letter suffixes may represent different instances of similar components. The drawings illustrate generally, by way of example, but not by way of limitation, various embodiments discussed in the present document.
**FIG. 1** is a block diagram representing the flow of a static presentation, or story.
**FIG. 2** is a block diagram representing the flow of a dynamic presentation, using curation techniques, according to an example of the present invention.
**FIG. 3** is a block diagram representing an example story that has been curated using techniques as described herein to provide for dynamic geographic customization, according to an example of the present invention.
**FIG. 4** is a block diagram illustrating an example system on which various embodiments may be implemented.
**FIG. 5** is a block diagram illustrating structural components and modules of an example system for generation of a dynamic presentation, according to an example of the present invention.
**FIG. 6** is a block diagram illustrating structural components and modules of an example system for curating a dynamic presentation, according to an example of the present invention.
**FIG. 7** is a flow diagram illustrating an example method for generation of a dynamic presentation, according to an example of the present invention.
**FIG. 8** is a flow diagram illustrating an example method for curating a dynamic presentation, according to an example of the present invention.

### DETAILED DESCRIPTION

In the following detailed description, reference is made to the accompanying drawings which form a part of the detailed description, wherein like numerals designate like parts throughout, and in which is shown by way of illustration embodiments that may be practiced. These embodiments may also be referred to herein as "examples." Such examples may include elements in addition to those shown or described. However, the authors also contemplate examples in which only those elements shown or described are provided. Moreover, the authors also contemplate examples using any combination or permutation of those elements shown or described (or one or more aspects thereof), either with respect to a particular example (or one or more aspects thereof), or with respect to other examples (or one or more aspects thereof) shown or described herein.

Embodiments described herein expand the current notion and usage of metadata for digitally distributed content. Including additional dynamically and statically created metadata variables and values not yet comprehended, metadata variables are made more robust and provide advantages not available in existing systems. More data may be stored and shared to provide opportunities for usage of greater contextual information about the meaning of the content. Context created by the behavior of a user may be provided in the metadata and stored to provide information to system administrators, content creators, etc. about the state of the content itself, as well as provide immediate resolution for viewers to typical human and system errors.

It is to be understood that other embodiments or examples may be utilized and structural or logical changes may be made without departing from the scope of the present disclosure. Therefore, the following detailed description is not to be taken in a limiting sense, and the scope of embodiments is defined by the appended claims and their equivalents.

In at least one embodiment, an embodiment is intended to ensure Web based content remain fresh. With updates such as localized recommendations, alternative links and provisions of contextually relative topic offerings, current content can transcend cultural, geographical or demographic, and even content curation lapses and barriers to become newly relevant and effective. The authors of this disclosure use illustrations and examples from the vantage point of consumer-content curation, and the creation of content using various disclosed embodiments. The disclosed approaches may apply equally to intranet and email distributed enterprise documents as Web documents, and enable the curation of the many enterprise presentations and documents which may be created and then lost amid piles of files, only to be recreated, with minor changes, in the future.

Reference in the specification to "one embodiment," "an embodiment" or "an example" means that a particular feature, structure or characteristic described in connection with the embodiment or example is included in at least one embodiment as described herein. Thus, the appearances of the phrase "in one embodiment" appearing in various places throughout the specification are not necessarily all referring to the same embodiment.

For purposes of explanation, specific configurations and details are set forth in order to provide a thorough understanding of the embodiments disclosed herein. However, it will be apparent to one of ordinary skill in the art that embodiments may be practiced without the specific details presented herein. Furthermore, well-known features may be omitted or simplified in order not to obscure understanding of the description herein. Various examples may be given throughout this description. These are merely descriptions of specific embodiments. The scope of the claims is not limited to the exact examples given.

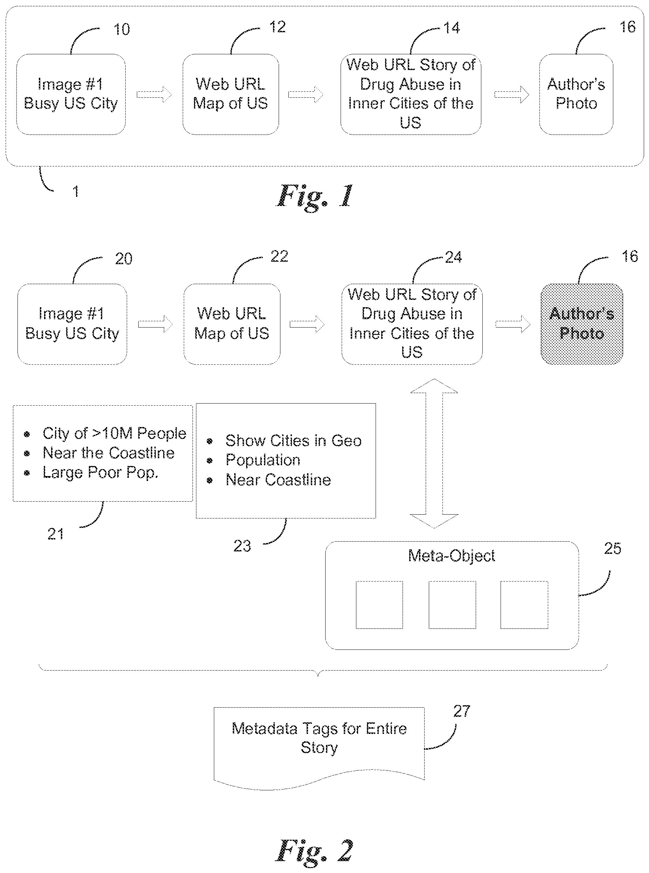

Referring now to the figures, **FIG. 1** illustrates a block diagram representing the flow of a static presentation, or story 1. This story is used merely as an illustrative tool, and is not meant to limit or define the scope of the present disclosure or appended claims. An author develops a presentation in this example to describe how he avoided getting caught in the trap of drug abuse. As a communication vehicle, the author uses imagery and content to visually place the story within an inner city in the U.S. to help relate his story to readers/viewers. While this illustration describes visual and textual elements, it will be understood that audio, video or other multi-media elements may be present. The elements, or objects 10, 12, 14, 16 within the story are typically static objects, and may represent embedded images, text, audio, video, or other media, or represent a link to a remote object, for instance located on a server or the Internet. The first element of the example story is a Web image of a busy U.S. city in block 10. A link to a URL on the Internet is used to provide a map of the U.S. in the second element, shown in block 12. Block 14 represents a third element, which is a link to a URL for the text of a story of drug abuse in inner cities of the U.S. The fourth element, represented in block 16, is a link to the author's photograph. It should also be understood that the four elements shown are not the entire presentation and may be interspersed with text, audio, video and other media formats. For instance, the author may use a photo from an American city like New York for element 10. As the story progresses the author shows a map 12 and discusses various cities around the U.S. with similar qualities, and finally finishes this discussion with a link to a Web URL 14 relating drug abuse in major U.S. cities. The presentation concludes with a photograph of the author (16).

**FIG. 2** is a block diagram representing the flow of a dynamic presentation based on the static presentation of **FIG. 1**, using curation techniques, according to an example of the present invention. In this example, the author desires to make static elements 10, 12 and 14, into dynamically changeable elements 20, 22, and 24, respectively. In an example of the present invention, the elements are generated into meta-objects 25. While static objects of **FIG. 1** may have associated metadata tags, for instance, to locate the remote object, these objects will be presented with the original, or static, media each time the presentation is viewed. In contrast, the meta-objects of FIG. 2 are generated with metadata tags to enable dynamic presentation, to change the object presented to a viewer at the time of presentation.

The meta-objects may be generated to correspond to a number of metadata-tags 27 for the entire presentation, to be used during viewing, reading, or playback of the presentation. In an example of the present invention, each meta-object may have its corresponding metadata tags embedded within the presentation. In another example of the present invention, the corresponding tags may be located in a separate file associated with the meta-object. In this example, the presentation author defines criteria for the dynamic city image 20 to be a city of greater than 10 million people, near a coastline, and have a large poor population, as similar to New York City, as parameters, also referred to as criteria, in block 21. Instead of requiring a map of the U.S. as element 22, the author defines criteria to show a map with cities in the geographic area of the reader, with similar population and near a coastline, as parameters in block 23. These parameters may be used to generate meta-objects and metadata-tags for dynamic curation.

The metadata tag exposes definitional and contextual relevancies among various objects in the presentation In essence, the metadata is the storyline of the objects and their relationships to one another. This metadata tag file 27 also specifies what items are "static," or cannot be changed, such as the author's photograph 16. Metadata tags 27 also specify items which are dynamic and can be contextually switched or replaced based on the audience's context, culture, geography, or when there is a broken link, etc. In this example, one of the elements may be a composite of several pieces of data aggregated from the Web, for instance, multiple tables, images and quotes. This meta-object may also have underlying components which may be replaced or updated for contextual relevance and an element which may be fixed (an image, for example).

Consequently, if this presentation were sent to a viewer in the People's Republic of China (PRC), the dynamic objects would be switched out by the rendering application or Web service to make the presentation more relevant to the viewer. For instance, the metadata tags 27 may be stored in a cloud center, or if this were an enterprise application, in an IT datacenter, and the result would be a more compelling and immediately familiar story using objects (media) with which the audience can better associate. In the case of the data tables object as a meta-object, more recent, accurate and local data is may be retrieved to replace the older U.S. data linked in the original presentation. In an example of the present invention, the presentation file may reside locally or remotely to its associated metadata tag file.

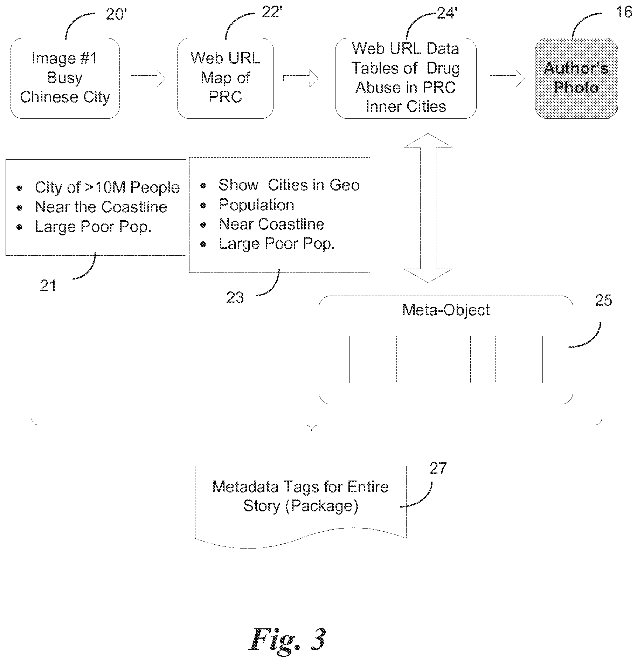

**FIG. 3** is a block diagram representing an example story that has been curated using techniques as described herein to provide for dynamic geographic customization, in the example of viewing the presentation in the PRC. In examples of the present invention, the presentation rendering tool may obtain contextual information about the viewer in a variety of ways. For instance, obtaining location (from access point information, GPS information, or IP address, etc), time of day, and/or login credentials may all be obtained. In an example of the present invention, the viewer's system may observe the user's behavior and work habits construct a model for developing a useful contextual base to provide as input to the rules within metadata tags for using context. The presentation has been created with both static elements and dynamic elements as dictated by the original author. Although the media objects render the story, the actual themes and important messages and how ideas are linked are kept within the metadata tag package 27. Examples of the present invention simplify, via automation, the updating of the story or presentation for a user in the PRC by using the metadata tags 27 to identify more current or relevant content which can be offered to the user or simply applied as replacements to existing out of date, or out of context content.

In this example, the meta-object identification for presentation flow, or playback, is stored in block 25 within the presentation, but the images presented may vary based on the viewer's location in the PRC. In an example of the present invention, the metadata tags corresponding to the meta-object may be stored within the presentation. In this example, it is assumed that the metadata tags corresponding to the meta-objects are stored in a metadata tag file 27. In some examples of the present invention, an original or static identifier for the original (non-curated) object may be stored with the meta-object within the presentation. In this example, the image of the busy city 20' is presented to the viewer as a Chinese city, based on the criteria in block 21, and map 22' is presented as a map showing Chinese cities in the PRC based on the criteria in block 23. The criteria in 21 and 23 is integrated with the meta-object via the metadata tag file 27. The data tables of drug abuse in 24' are updated during playback to show tables relevant to the PRC, as well. The author's picture 16 remains static, as defined in the meta-object file 25.

In an example, the metadata tags may be used to correct for broken links, and are not necessarily used to provide for geographically customized, or contextual information. For instance, it is foreseen that maps may change or drug abuse statistics may be updated. In an enterprise implementation, for instance, individual pages in a presentation might be metadata tagged to allow automatic updating of these pages, or content within the pages, to newer or more relevant information, based on changes in audience type or time.

In a cloud-model, the correlation of metadata tag files 27, also referred to herein as packages, may be done, increasing the relevance and making the stories (curated content) up-to-date. In addition, services may be offered to provide efficient object catalogs created to keep presentations fresh and relevant. For instance, in a commercial context; objects may be searchable, purchasable, rentable, etc. Multiple versions or sets of similar content may be available by a service to provide finer grain selection for replacing a specific meta-object with a more current or more personalized one. An analogy to the catalog is a dictionary, that maps an object to a metadata tag and flow to acquire/curate it.

Generally, a metadata tag package is a shorthand representation of meta-objects in a larger presentation; the package may be scanned and recommendations may be made to another content creator who might be interested in leveraging some of that material. For communities of consumers who have a passion for a certain topic, this can help them find similar content. In an enterprise implementation, an IT datacenter-based service may help users by presenting updated or relevant content to people creating presentations or documents, as opposed to the current model of emailing and asking users or manually scanning presentations and documents looking for relevant materials.

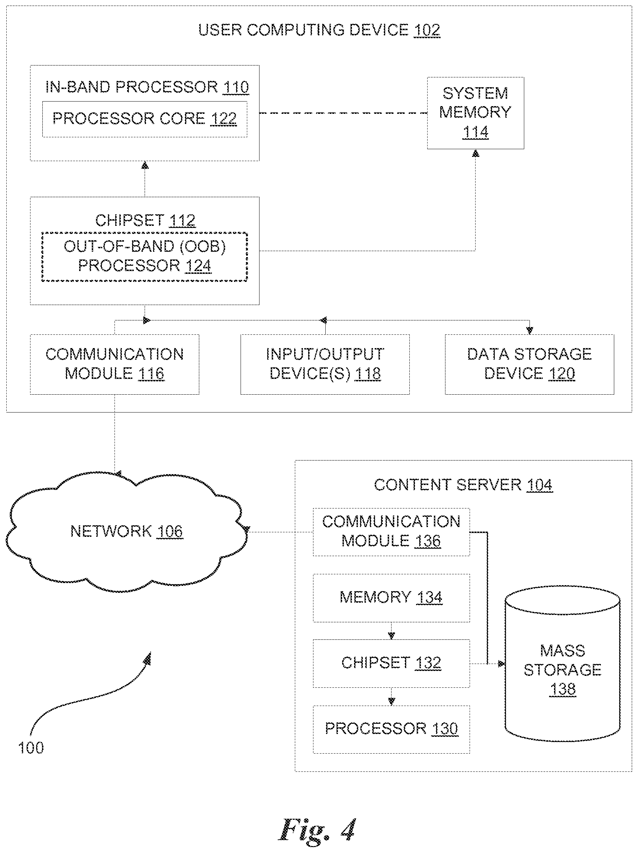

**FIG. 4** is a simplified block diagram illustrating an example system 100 configured to provide a system for generating, monitoring or viewing a dynamic presentation, according to an example of the present invention. Exemplary system 100 includes an electronic user device 102, a content server 104, and a network 106 that communicatively couples the electronic device 102 to the server 104. Although only one electronic device 102, one server 104, and one network 106 are illustratively shown in **FIG. 4**, the system 100 may include any number of electronic devices 102, servers 104, and networks 106 of similar or dissimilar architecture. For instance, the electronic device 102 may communicate over one or more networks 106 with multiple servers 104, and each server 104 may communicate over one or more networks 106 with multiple electronic devices 102.

The electronic device 102 may be embodied as any type of electronic device capable of performing the functions described herein. By way of example, the electronic device 102 may be embodied as a personal computer (PC), a laptop computer, a handheld computer, an ultra-mobile personal computer, such as, a tablet device, a netbook device, an Ultrabook™ computing device, a hybrid laptop/tablet device, an electronic reader device (ebook), a personal digital assistant (PDA) device, a mobile internet device (MID), a smartphone, a cellular phone, and so forth. In the illustrative example of the present invention shown in **FIG. 4**, the electronic device 102 may be implemented using hardware, firmware, software, or a combination thereof.

Exemplary electronic device 102 comprises one or more processors 110, also referred to as host processor or in-band processor. The host processor 110 may comprise one or more processor cores 122. The electronic device 102 further comprises system control logic, or chipset, 112 coupled to the at least one processor 110, system memory 114 coupled to system control logic 112, non-volatile memory and/or storage device(s) 120 coupled to system control logic 112, and one or more communications interfaces or modules 116 coupled to system control logic 112. The system control logic may optionally further comprise a secondary out-of-band processor 124 which may include its own communication module (not shown). System control logic 112 is also coupled to one or more input/output devices 118. It should be appreciated that the electronic device 102 may include other components, sub-components, and devices commonly found in a computer and/or computing device, which are not illustrated in **FIG. 4** for clarity of the description.

In one example of the present invention, one or more processors 110 may be any type of processor capable of executing software/firmware, such as, for example, a microprocessor, digital signal processor, microcontroller, or the like. The one or more processors 110 may be embodied as single core processors having a processor core 122. However, in other example of the present invention, the one or more processors 110 may be embodied as multi-core processors having multiple processor cores. Additionally, the electronic device 102 may include additional processors having one or more processor cores. The one or more processors 110 is generally responsible for executing a software stack, which may include an operating system and various applications, programs, libraries, and drivers resident on the electronic device 102.

In one example of the present invention, system control logic 112 may include any suitable interface controllers to provide for any suitable interface to at least one processor 110 and/or to any suitable device or component in communication with system control logic 112.

In one example of the present invention, system control logic 112 may include one or more memory controllers to provide an interface to system memory 114. System memory 114 may be used to load and store data and/or instructions, for example, for electronic device 102. In one example of the present invention, system memory 114 may include any suitable volatile memory, such as, for example, suitable dynamic random access memory (DRAM).

In one example of the present invention, system control logic 112 may include one or more input/output (I/O) controllers to provide an interface to a display device (not shown), display controller (not shown), non-volatile memory and/or storage device(s) 120, and communications interface(s) 116.

In one example of the present invention, non-volatile memory and/or storage device(s) 120 is a machine accessible medium (also referred to as computer readable medium) which may be used to store data and/or instructions, for example. Non-volatile memory and/or storage device(s) 120 may include any suitable non-volatile memory, such as flash memory for example, and/or may include any suitable non-volatile storage device(s), such as one or more hard disk drives (HDDs), one or more compact disc (CD) drives, and/or one or more digital versatile disc (DVD) drives for example.

Communications interface(s) 116 may provide an interface for electronic device 102 to communicate over one or more networks, such as network 106, with server 104 or any other suitable networked device. Communications interface(s) 116 may include any suitable hardware, firmware, software, or a combination thereof. In one example of the present invention, communications interface(s) 116 may include, for example, a network adapter, a wireless network adapter, a telephone modem, and/or a wireless modem. In an example of the present invention for wireless communications, communications interface(s) 116 may use one or more antennas (not shown).

In one example of the present invention, system control logic 112 may include one or more input/output (I/O) controllers to provide an interface to any suitable input/output device(s) such as, for example, an audio device to help convert sound into corresponding digital signals and/or to help convert digital signals into corresponding sound, a camera, a camcorder, a printer, and/or a scanner (all of which are not shown).

In one example of the present invention, a display device may be implemented using any suitable display technology, such as, for example, a liquid crystal display (LCD). In one example of the present invention, a display controller may be coupled to help control input through the display device. In one example of the present invention, the display controller may be coupled to system control logic 112 for at least one I/O controller and/or at least one processor 110 to process input detected by the display controller through the display device. In an example of the present invention, system control logic 112 may include one or more graphics controllers to provide one or more display interfaces to the display device. In an example of the present invention, the display device may be communicatively coupled to the electronic device 102 directly, wirelessly or remotely.

In one example of the present invention, the display device may be a touch-sensitive display device and display controller may be a touch controller. The touch-sensitive display device may be implemented using any suitable touch-sensitive technology such as, for example and without limitation, capacitive, resistive, surface acoustic wave (SAW), infrared, and optical imaging. In one example of the present invention, the touch-sensitive display device may be implemented using any suitable multi-touch technology. The touch-sensitive display device may be implemented using any suitable display technology, such as, for example, a liquid crystal display (LCD). The touch controller may be coupled to help control touch input through the touch-sensitive display device. In one example of the present invention, the touch controller may be coupled to system control logic 112 for at least one I/O controller and/or at least one processor 110 to process touch input detected by the touch controller through the touch-sensitive display device. In an example of the present invention, system control logic 112 may include one or more graphics controllers to provide one or more display interfaces to the touch-sensitive display device.

In one example of the present invention, at least one processor 110 may be packaged together with logic for one or more controllers of system control logic 112. In one example of the present invention, at least one processor 110 may be packaged together with logic for one or more controllers of system control logic 112 to form a System in Package (SiP). In one example of the present invention, at least one processor 110 may be integrated on the same die with logic for one or more controllers of system control logic 112. In one example of the present invention, at least one processor 110 may be integrated on the same die with logic for one or more controllers of system control logic 112 to form a System on Chip (SoC).

The content server 104 may be embodied as any type of computing device separate from the electronic device 102. By way of example, the server 104 may be embodied as a personal computer, a workstation, a laptop computer, a handheld computer, a mobile internet device, a cellular phone, a personal data assistant, a telephony device, a network appliance, a virtualization device, a storage controller, or other computer-based devices configured to communicate with the electronic device 102 over the network 106. In the illustrative example of the present invention shown in **FIG. 4**, the server 104 includes a processor 130, a chipset 132, a system memory 134, communication module 136, one or more mass storage devices 138, and one or more input/output devices (not shown). In some examples of the present invention, several of the foregoing components may be incorporated on a motherboard of the server 104, while other components may be communicatively coupled to the motherboard via, for example, a peripheral port. Furthermore, it should be appreciated that the server 104 may include other components, sub-components, and devices commonly found in a computer and/or computing device, which are not illustrated in FIG. 4 for clarity of the description.

The components of content server 104 may be similar or dissimilar to the components of user device 102, and may comprise similar or dissimilar alternative components as described above for electronic device 102. For instance, the processor 130 of the server 104 may be any type of processor capable of executing software/firmware, such as a microprocessor, digital signal processor, microcontroller, or the like. The processor 130 is illustratively embodied as a single processor and may have a single processor core. However, in other examples of the present invention, the processor 130 may be embodied as a multi-core processor having multiple processor cores. Additionally, the server 104 may include additional processors 130 having one or more processor cores. The processor 130 is generally responsible for executing a software stack, which may include an operating system and various applications, programs, libraries, and drivers resident on the server 104.

Alternative and equivalent components of content server 104 are not reiterated here, for brevity, but it will be understood that the architecture and configuration of content server 104 may vary as described for electronic device 102.

In an example of the present invention, the content server 104 may be one or more servers having data to be accessed by the meta-objects. The data on the content server(s) 104 may be accessible via the public Internet or via a private enterprise intranet (network 106). The presentation with metadata tags may be retrieved from the content server 104 by the viewer. When dynamic meta-objects are presented to the viewer, updated or custom content (curated content) may be retrieved from one or more content servers 104 which may be the same or a different servers from where the presentation was retrieved In an example of the present invention, the presentation may also reside locally on the computing device 102, if it had been created there, or retrieved manually from a mobile storage device such as a USB flash drive, floppy disk, CD or DVD, etc..

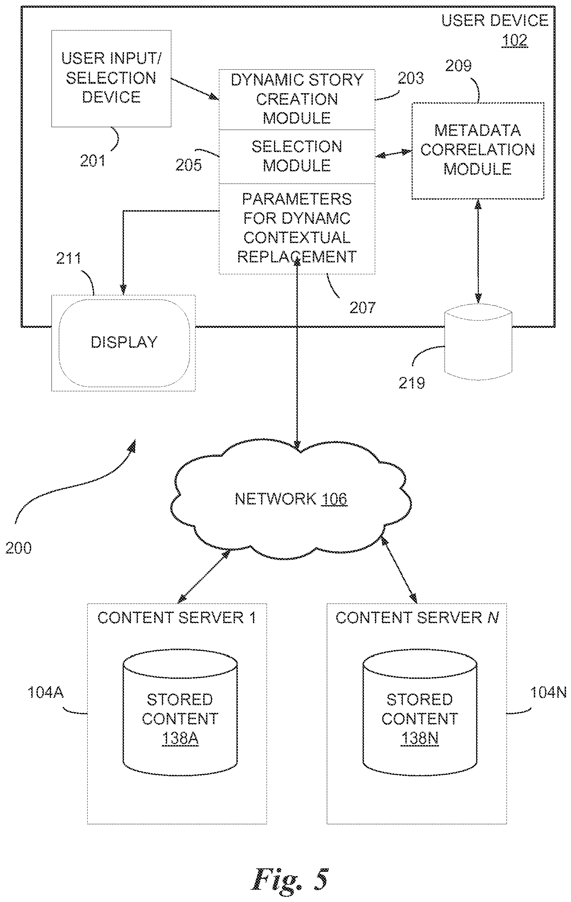

**FIG. 5** is a block diagram illustrating structural components and modules of an example system 200 for generation of a dynamic presentation, according to an example of the present invention. User device 102 includes a user/input device 201 and a display 211. A dynamic story creation module 203 may receive input, commands and controls from an author, via the input device 201. The dynamic story creation module 203 may include, or be coupled to, a selection module 205 to aid the author in selecting dynamic content from the Web or enterprise server 104A-N over network 106, and saving parameters or criteria relevant to the content. In an example of the present invention, the process by which the author selects the dynamic content is tracked and recorded as part of the metadata tag associated with the dynamic meta-object within the presentation. The tracked process may be saved as a procedure table, a set of rules or other appropriate format as desired. For instance, the author may desire to include a dynamic element representing a map of an inner city, near a coastline, and having a large population. In one example of the present invention, the author must define the criteria and enter it manually. In another example of the present invention, the author commences the selection process and then searches content servers 104A-N over the network 106 to find an appropriate map. An appropriate map may be found in stored content 138A-N somewhere on one of the content servers 104A-N to be included as the original content for the dynamic meta-object. The steps taken by the author to select an appropriate Web image or URL, for instance, search criteria such as "map <and> U.S.<and> population greater than 10 million <and> near coastline" may be recorded by the selection module 205 and stored within the metadata tag file 27 for the meta-object. When results are returned to the author and one is selected for the meta-object, other criteria may also be saved in the metadata tag, such as the Web site or content owner information, etc. This procedural information and other selection criteria may assist in curating a broken link found during presentation, and in dynamically selecting a relevant replacement.

In an example of the present invention, an additional policy may be saved with the metadata tags further defining rules for replacement of dynamic meta-objects based on a viewer's context in module 207. For instance, replacement of the element may be prohibited for a specific user, group of users, or users in a specific geographic location, or age group, or having a specific IP address, etc. Various parameters or criteria may be defined 207 and stored with the original selected link to the map image, or with the metadata tag associated with the meta-object. For instance, a broken link when viewing may require that the same process is to be repeated to provide a fresh link to content. Another parameter may require the location of the viewer be used to provide geographically relevant data to the viewer and replace "U.S." in the search string, even when the link is not broken. In this way, when the meta-object is to be presented to the reader, the process may be recreated to provide relevant and/or fresh content. The dynamic story creation module may be further coupled to a metadata correlation module 209.

The metadata correlation module 209 may be used to correlate the selection and/or contextual criteria used for finding the appropriate content when the meta-object presented to the viewer. In an example of the present invention, the meta-objects are correlated to their corresponding metadata tags by the metadata correlation module 209. A link to the storage location of the individual selection and/or contextual replacement metadata tags is identified and may be stored in conjunction with the meta-object within the presentation. Once the metadata correlation of meta-objects and metadata tags has been completed, the metadata tag package and/or presentation document may be stored in storage 219 for later use in the presentation. In an embodiment, the metadata tag package may be stored remotely on a server, cloud server of specialized metadata tag server accessible over network 106. The presentation may be stored locally or remotely to the package, but is correlated with the location of the package. In an example of the present invention, the meta-objects within the presentation include an original link or object (e.g. a static link) and an identification or correlation to the tags defining dynamic link information within the metadata tag package. Thus, if the metadata tag package is unavailable (i.e., the server is down or the user lacks the appropriate authorization), then the presentation may be viewed in its original static form. In another example of the present invention, the metadata tag package is stored within, or coupled to, the presentation and is distributed with the package.

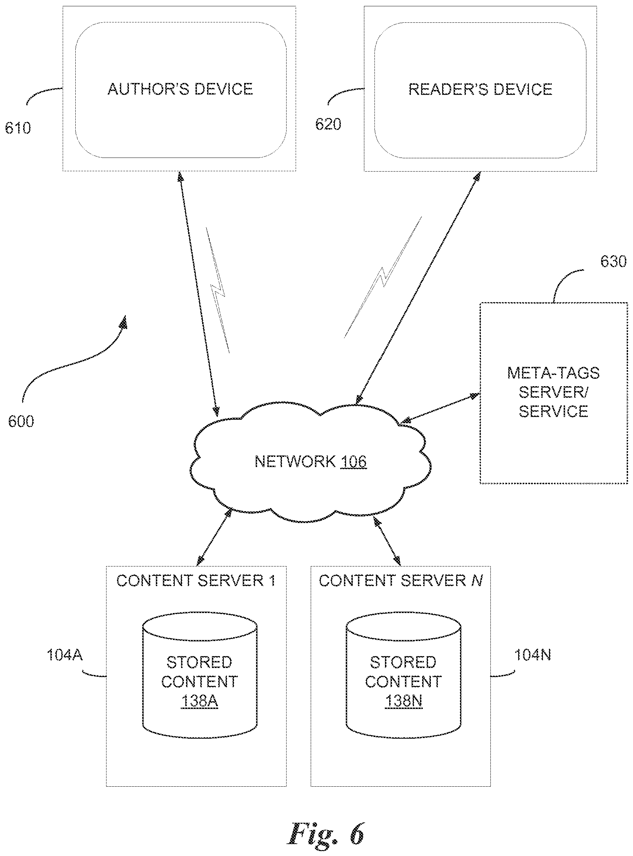

**FIG. 6** is a block diagram illustrating structural components and modules of an example system 600 for curating a dynamic presentation, according to an example of the present invention. An author may create a dynamic presentation using device 610. A reader, or viewer, may view the dynamic presentation on the same device or another reader's device 620. The devices 610 and 620 may be coupled via network 106 to enable the viewer to retrieve the presentation directly from the author's device 610 from storage 219. The devices may be both connected to the network 106 (either wired or wirelessly) and share presentations via another server. In another example of the present invention, the presentation may be stored on a content server 104A-N in stored content 138A-N or be available from a meta-tag server 630. A service on the meta-tag server 630 may be used to parse the metadata tag file associated with the meta-objects to dynamically update the meta-objects with fresh or relevant content for presentation to the reader.

In an example of the present invention, the reader may utilize a dynamic presentation module (not shown) that may reside on the reader's device 620 or on the meta-tag server 630. The dynamic presentation module may be a custom presentation application or may be integrated with a legacy or common document format, i.e., Word, PowerPoint, multi-media presentation, Web browser, online slideshow. etc. The dynamic presentation module be an add-on to a Web browser, HTML5 framework, or Javascript script, or in a native environment such as Microsoft® Windows®, the dynamic curation portion may be linked as a dynamic link library (DLL). In another example of the present invention, the dynamic meta-objects may be embedded objects within a presentation document. In an example of the present invention, during presentation of a meta-object to the reader, the dynamic presentation module may locate the metadata tags from within the presentation (embedded objects) or retrieve the corresponding tags from a separate, and possibly remote, metadata tag file/package.

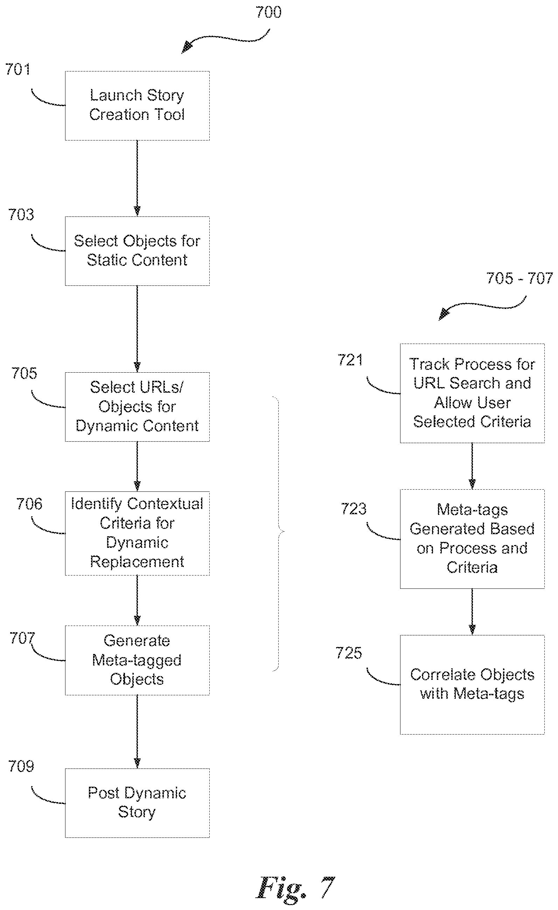

**FIG. 7** is a flow diagram illustrating an example method 700 for generation of a dynamic presentation, according to an example of the present invention. In an example of the present invention, the author launches a story creation tool in block 701. The tool may reside locally, on a server or cloud service, or be an add-on to another multi-media or presentation generation tool/application. The author creates content for the presentation and may include text, images, audio, video, etc. Static content, such as the author's picture in the example above, may be identified as a static object in block 703. Static objects may be associated with metadata tags that identify the location of the object (locally or remotely). When a user wishes to create a dynamic meta-object, in 705, the selection process, for instance, search criteria may be tracked and recorded as part of a metadata tag associated with the dynamic meta-object, in block 705. The original location identifier (non-curated link) for the meta-object may be stored with the meta-object within the presentation.

In an example of the present invention, for those meta-object that are to be replaced with contextually relevant objects, criteria for replacement may be entered in block 706. The author may associate criteria or parameters to be used for replacement of the meta-object with viewer relevant data. These contextual parameters are saved in metadata tags associated with the meta-object that is to be contextually and dynamically replaced during playback of the presentation.

A metadata tag package including each metadata tag file associated with objects and meta-objects within the presentation may then be created in block 707. The package may be integrated into the presentation after all of the metadata tags have been generated, may remain as a separate file or package and stored separately from the presentation document. The presentation may be posted locally or remotely, in block 709, to be accessible to authorized readers/viewers.

The selection of meta-object criteria 705, contextual criteria 706, and the generation of meta-objects and their associated metadata tag files, is further described in conjunction with blocks 721, 723 and 725. Selection criteria for the metadata tag associated with a meta-object may be generated by tracking and recording the process the author uses for selecting the element, in block 721. For instance, the search terms, search engine, and related criteria may be tracked and saved. The selection process may track each time the user rejects a link or element. For example, the author may be provided with a dozen choices for maps to include as the element in the meta-object showing a map. The author may view several of them before making a choice, Each viewed object may have additional metadata associated with it, for instance, owner/author or origination of the element, type of element, e.g., JPEG, MPEG, image with text surrounding it or note, etc. Some of these additional metadata tags may also be associated with the meta-object, perhaps to provide guidance for future replacement, or curation. The more closely a replacement element resembles the original element in terms of process and specified criteria, the more likely it will be to be a relevant and viable curation of the original element to replace a broken link. For instance, if the content provider has merely moved or renamed the original content, finding its logical replacement will be more likely if the presentation system finds the replacement at the same source site, or an element generated by the same content author. Thus, tracking this data and storing it with the metadata tag may help provide more curative and relevant results for broken links.

The author may further specify which, if any, of the search criteria are to be altered based on the reader's contextual information. For instance, the author may flag a geographic location as being modifiable if the desire is to offer the presentation with dynamic images related to location.

Once the author selects an image, URL, link or other information to identify the element to be presented in a meta-object, a metadata tag is generated for the meta-object, in block 723. The metadata tag may include a link to the original story element, as well as, information related to the search process, and criteria that may be altered based on customization for a reader's context.

The meta-objects are correlated with the metadata tags to generate a complete presentation package in block 725. The package may then be stored or distributed, in block 709. The package may be integrated into the presentation, or be a separate file, or set of files. Each meta-object within the presentation will identify the location of its corresponding metadata tag within the package.

In an example of the present invention, the system for generating and/or viewing dynamic presentation may automatically, or by manual commencement, run through the meta-objects in a presentation and search for broken links. In an example of the present invention, the monitoring for broken links is of the links identified in the metadata tag package, and access to the presentation is not necessary to search for broken links or replacement links. One or more replacement elements may be suggested to the author in a notification message or an email. The author may then select the most appropriate replacement, or reject a replacement and search for another. In an example of the present invention, when the system presents the author with multiple replacement choices, the author's selection criteria, or rejection criteria, may be saved as an extension or integrated into the metadata tag for the element to be replaced. This additional criteria may enable a future replacement choice to be more relevant. In an example of the present invention, a policy may be associated with the presentation so that the author will be notified after some number of broken links have been found in a presentation, so that the author may update the entire presentation. In an example of the present invention, a policy may be associated with the presentation so that the author will be notified after some number of dynamic elements have been replaced in a presentation, and may be stored in a log file associated with the presentation.

In an example of the present invention, the metadata tag package may reside on a server having a monitoring and notification agent (not shown). The monitoring and notification agent may run at a pre-selected periodicity to check for broken and replacement links within one or more metadata tag packages associated with the presentation. In another example of the present invention, the agent checks for broken and replacement links for a presentation. The presentation may have the metadata tags embedded within, or be correlated with a separate metadata tag package. A log file may be stored with the package or presentation. In an example of the present invention, the package or presentation includes identifying information about the author, or owner of the presentation and may send notifications or log files directly to the author or owner.

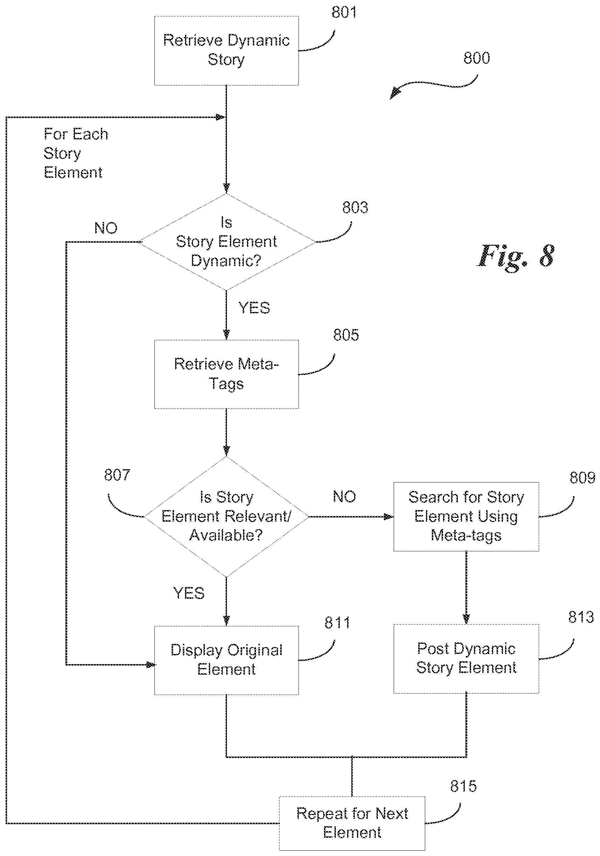

**FIG. 8** is a flow diagram illustrating an example method 800 for playback and curation of a dynamic presentation, according to an example of the present invention. Once the presentation package has been stored or distributed, it is ready for viewing by a reader. The reader retrieves the story, or presentation, in block 801. The presentation may reside locally, or remotely to the reader's device In an example of the present invention, the reader may retrieve elements of the presentation in order, rather than retrieve the entire presentation, as streaming data. The associated metadata tag package may reside remotely, with the presentation, and be accessed via a service when a dynamic element is to be viewed by the reader. A curation module for providing the reader with a curated dynamic presentation may be fully integrated into a separate viewing application, or be an add-on to other applications for viewing multi-media presentations, as described above.

In an example of the present invention, the reader progresses through the presentation as for any legacy or common document or multi-media viewer until reaching a meta-object that requires curation (either due to a broken link or for customization purposes). Static objects will be presented in a normal manner. For each story element, it is determined whether the element is dynamic, based on the metadata tag associated with the element, in block 803. In an example of the present invention, static elements may not have a special metadata tag and are viewed as usual, in block 811. In another example of the present invention, the static element has a metadata tag indicating that it is static, and is displayed as usual in block 811.

If the story element is dynamic, represented by a meta-object, then its associated metadata tag is retrieved from the associated package, in block 807. If the story element is available (no broken link) and is still relevant to the reader, e.g., not required to be customized, then the meta-object (story element) is displayed as the original element, in block 811. In an example of the present invention, the metadata tag may also identify that the element should be updated with newer data, when available. In this case, the meta-object may act as if the link is broken and search for newer information. If no newer information is found, the original element may be presented to the reader. If the story element is either not relevant to the reader, e.g. requires contextual customization, or is not available at the original location, e.g. a broken link, then a new element must be presented to the reader as the meta-object. Criteria in the metadata tag is used to search for a replacement element, in block 809. For instance, perhaps a content provider has renamed the original element or moved the element to a new location. In this case of a broken link, the criteria used to generate the original element, which is stored in the metadata tag, may be used to find an equivalent element. In an example of the present invention, a replacement element that is provided at the same site, or by the same content provider, as identified in the metadata tag, may be used in favor of content available from a different provider, even if the other content is ranked higher in the search results.

Perhaps, the metadata tag specifies that within the search criteria a location should be updated with the reader's location, for contextual replacement. The original link is not broken, but instead identified as requiring replacement for customization for a reader. The appropriate contextual information is determined for the specified criteria. For instance, the location of the reader may be obtained from access point information, GPS information, or IP address, etc. Other contextual information may be obtained as necessary, or even be provided to the presentation module after querying the reader, if unobtainable in an automatic fashion. The original search string, as identified in the metadata tag, may have the original search location replaced with the reader's location and re-runto provide a more relevant link to an element for the meta-object. Once the replacement element has been located, this new element is presented to the reader in block 813. In an example of the present invention, if no suitable replacement can be found, the original element may be presented to the reader. In another example of the present invention, if no suitable replacement can be found, the reader is notified with a message and the presentation continues with or without displaying the original element. The reader may be given an option to display the original element or just move on to the next element of the presentation. This process may be repeated for each meta-object, or story element, in the presentation, by following block 815 to block 803.

In another example of the present invention, the author may post or distribute only a snapshot of the presentation, in static form. In some instances, the author may not want the dynamic presentation to be available before reviewing it for consistency, relevance, and accuracy, In this case, the author may choose to view the dynamic story first, before releasing the snapshot. In this example, the author may be presented with a choice of replacements and have the opportunity to select the best one, as discussed above. Criteria based on the choices made may be further entered into the metadata tags for the elements. The author may choose to view the presentation as if the author were another individual, for instance by mimicking the criteria to be used for customization (context), in order to review how the replacement curation would be viewed by that reader. In an example of the present invention, the author may be given an opportunity to fine tune the replacement criteria to provide better results to the reader.

Components of the dynamic story or generation or curation module may be integrated with a presentation application in a variety of ways. In a native operating system environment, a DLL may be used for a background process to manage the metadata tagging and monitoring for a number of applications. In a Web browser or Web application, a plug-in or Javascript script within an HTML5 framework may be used to manage most of the correlation and metadata in the cloud. In a more advanced form, there may be different agents residing within each repository which, when an agent identifies content being deleted, replaced or modified, sends an active notice to every "customer" application or service notifying them of a change. In a sufficiently intelligent network, a content notice sent by one repository may be picked up by other repositories which may use this information to "tune and personalize" content and content recommendations. The other repositories are able to parse and act on metadata tags and process information, as well. In this manner, one change may ripple through all the metadata in a presentation and all content or messages which might be impacted by a change. Meta-object updates or changes may be curated simultaneously as opposed to one by one Other implementations and variations are contemplated within the scope of the embodiments described herein, and the examples below.

### ADDITIONAL NOTES AND EXAMPLES

Examples can include subject matter such as a method, means for performing acts of the method, at least one machine-readable medium including instructions that, when performed by a machine cause the machine to performs acts of the method, or of an apparatus or system for generating, viewing or monitoring a dynamic presentation according to embodiments and examples described herein.

Example 1 is a method for generating a dynamic presentation, comprising tracking and recording steps taken by a user in selection of an element identified to be a dynamic element in a presentation; generating at least one metadata tag corresponding to the tracked steps and the dynamic element; correlating the at least one metadata tag with a meta-object representing the dynamic element in the presentation; and generating a metadata tag package from the correlated at least one metadata tag for the presentation. The metadata tag package may be optionally integrated within the presentation or generated as a separate data file.

Example 2 includes the subject matter of Example 1 and repeats for at least one additional dynamic element the tracking and recording of steps, the generating of at least one additional metadata tag, and correlating the at least one additional metadata tag with an at least one additional meta-object representing the at least one additional dynamic element in the presentation. The metadata tag package may be generated with tags associated with the first dynamic element, as well as, metadata tags associated with each additional meta-object for the presentation. The metadata tag package may optionally includes static elements.

Example 3 may include the subject matter of any of Examples 1 and 2, including or omitting optional elements, and wherein the metadata tag comprises the tracked steps, an identified network location of the selected element, and criteria for replacement and/or curation of the dynamic element.

Example 4 may include the subject matter of any of Examples 1, 2 and 3, including or omitting optional elements, and further comprising notifying a user of broken links corresponding to at least one dynamic element in the presentation.

Example 5 may include the subject matter of any of Examples 1-4, including or omitting optional elements, and further comprising suggesting at least one replacement element for a dynamic element having a broken link. Responsive to the user selecting one of the at least one replacement element, the method may optionally update the metadata tag corresponding to the dynamic element to indicate the selection by the user.

Example 6 is an apparatus configured to perform any of the methods described in Examples 1-5, either including or omitting the optional features.

Example 7 is at least one computer readable medium or machine accessible medium having instructions stored thereon, that when the instructions are executed on a machine, will cause the machine to perform any of the methods described in Examples 1-5, either including or omitting the optional features.

Example 8 is an apparatus configured with means to perform any of the steps described in Examples 1-5, either including or omitting the optional features.

Example 9 is a method for playback of a dynamic presentation as might be generated by the subject matter of any of Examples 1-9, or in a similar manner, comprising retrieving a presentation having static objects and dynamic meta-objects, wherein each dynamic meta-object corresponds to at least one metadata tag; presenting static elements in the presentation to a user; selectively replacing an element corresponding to each dynamic meta-object in the presentation according to information and criteria stored in the metadata tag corresponding to the dynamic meta-object; and presenting one of the element corresponding dynamic meta-object or the selectively replaced dynamic element to the user during playback of the presentation.

Example 10 may include the subject matter of Example 9 and wherein the replacing of an element corresponding to the dynamic meta-object is responsive to finding a broken link for the element during playback. When a broken link is found a notification of the broken link found, may be optionally sent to the author, presentation viewer, or other administrative entity. The notification may be also be optionally stored in a log file.

Example 11 may include may include the subject matter of any of Examples 9-10, including or omitting optional elements, and further comprising identifying one of geographical, cultural, demographic or other contextual information corresponding to the user, wherein the replacing of an element corresponding to a dynamic meta-object is to replace the element with a new element relevant to the contextual information corresponding the user.

Example 12 is an apparatus configured to perform any of the methods described in Examples 9-11, either including or omitting the optional features.

Example 13 is at least one computer readable medium or machine accessible medium having instructions stored thereon, that when the instructions are executed on a machine, will cause the machine to perform any of the methods described in Examples 9-11, either including or omitting the optional features.

Example 14 is an apparatus configured with means to perform any of the steps described in Examples 9-11, either including or omitting the optional features.

Example 15 is a system for generating a dynamic content presentation, comprising: a dynamic story creation module coupled to a selection module, where the selection module is to track and record steps taken by an author in a process for selecting a dynamic element of the dynamic content presentation, and wherein metadata tags are to be generated for each dynamic element with information corresponding to the tracked steps; a dynamic contextual replacement module to allow identification of context criteria and parameters to be used for replacing a dynamic element with a new element relevant to context of a viewer of the presentation; and a metadata correlation module to correlate criteria used in the process for selecting the dynamic element with the metadata tags corresponding to the dynamic element and with context criteria for replacing the dynamic element based on contextual information corresponding to the viewer, and further to generate a metadata tag package for the presentation. It is contemplated that the various modules of this example system may be communicatively coupled, functionality integrated into one or multiple modules, and reside locally or remotely to each other in a distributed computing environment. The metadata tag package may be optionally integrated within the presentation or generated as a separate data file.

Example 16 may include the subject matter of Example 15, including or omitting optional elements, wherein the dynamic story creation module is one of custom presentation application; integrated with a legacy or common document creation application, Web browser, or online slideshow; an add-on to a Web browser, HTML5 framework, or Javascript script; or integrated as a dynamic link library (DLL) in a native operating system environment.

Example 17 may include the subject matter of any of Examples 15 and 16, including or omitting optional elements, wherein the dynamic contextual replacement module is configured to identify replacement criteria for updating a dynamic element with a more recent element even when viewer based contextual information is not specified.

Example 18 may include the subject matter of any of Examples 15-17, including or omitting optional elements, wherein the selection module is to identify a process of selecting a new element to replace the dynamic element when a broken link is found retrieving the dynamic element during playback.

Example 19 may include the subject matter of any of Examples 15-18, including or omitting optional elements, wherein the dynamic contextual replacement module is to embed contextual replacement criteria in the metadata tag corresponding to the dynamic element to be contextually replaced during playback.

Example 20 may include the subject matter of any of the foregoing Examples, including or omitting optional elements, and further comprise, or be communicatively coupled with an agent to monitor for broken links found during playback and automatically notify the author of the broken links found, at a pre-selected periodicity.

Example 21 may include the subject matter of any of the foregoing Examples 15-20, including or omitting optional elements, and further, wherein the selection module is further configured to enable the author make a further selection for a replacement dynamic element where an original dynamic element has a broken link, wherein the selection module is to track steps corresponding to the further selection and record the steps corresponding to the further selection with the metadata tag associated with the original dynamic element in the presentation.

Example 22 is a system for monitoring dynamic presentations, comprising: a monitoring agent running on a computing device, the monitoring agent configured to retrieve at least one metadata tag package corresponding to a dynamic presentation, mimic playback of the presentation by attempting to access each dynamic element identified in the metadata tag package, and send a notification when a broken link is found corresponding to a dynamic element. The metadata tag package may be optionally integrated within the presentation or optionally generated as a separate data file.

Example 23 may include the subject matter Example 22, including or omitting optional elements, wherein the monitoring agent resides on a server accessible over a network, and the at least one monitored metadata tag packages resides either locally to the agent or remotely to the agent to be accessed over the network.

Example 24 may include the subject matter of any of Examples 22 and 23, including or omitting optional elements, wherein mimicking playback of the presentation is to attempt access for dynamic elements of the presentation and selectively ignore static elements. Static elements may optionally be accessed during monitoring.

Example 25 may include the subject matter of any of Examples 22 - 24, including or omitting optional elements, wherein the metadata tag package is stored separately from the corresponding presentation, and the monitoring agent is to attempt access of dynamic elements identified in the metadata tag package without requiring access to the presentation.

Example 26 may include the subject matter of any of Examples 22 - 25, including or omitting optional elements, wherein the monitoring agent is further configured to send suggestions for replacements with the notification of a broken link found.

The techniques described herein are not limited to any particular hardware or software configuration; they may find applicability in any computing, consumer electronics, or processing environment. The techniques may be implemented in hardware, software, firmware or a combination.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

For simulations, program code may represent hardware using a hardware description language or another functional description language which essentially provides a model of how designed hardware is expected to perform. Program code may be assembly or machine language, or data that may be compiled in advance or during execution and/or interpreted. Furthermore, it is common in the art to speak of software, in one form or another as taking an action or causing a result. Such expressions are merely a shorthand way of stating execution of program code by a processing system which causes a processor to perform an action or produce a result.

Each program may be implemented in a high level procedural or object-oriented programming language to communicate with a processing system. However, programs may be implemented in assembly or machine language, if desired. In any case, the language may be compiled or interpreted.

Program instructions may be used to cause a general-purpose or special-purpose processing system that is programmed with the instructions to perform the operations described herein. Alternatively, the operations may be performed by specific hardware components that contain hardwired logic for performing the operations, or by any combination of programmed computer components and custom hardware components. The methods described herein may be provided as a computer program product that may include a machine accessible, also referred to as computer readable, medium having stored thereon instructions that may be used to program a processing system or other electronic device to perform the methods. While a machine-accessible medium may be illustrated as a single medium, the terms "machine accessible medium," or "computer readable medium" may include a single medium or multiple media (e.g., a centralized or distributed database, and/or associated caches and servers) that configured to store the one or more instructions. Program code, or instructions, may be stored in, for example, volatile and/or non-volatile memory, such as storage devices and/or an associated machine readable or machine accessible medium including solid-state memory, hard-drives, floppy-disks, optical storage, tapes, flash memory, memory sticks, digital video disks, digital versatile discs (DVDs), etc., as well as more exotic mediums such as machine-accessible biological state preserving storage. A machine accessible medium may include any mechanism for storing, transmitting, or receiving information in a form readable by a machine, and the medium may include a tangible medium through which electrical, optical, acoustical or other form of propagated signals or carrier wave encoding the program code may pass, such as antennas, optical fibers, communications interfaces, etc. Program code may be transmitted in the form of packets, serial data, parallel data, propagated signals, etc., and may be used in a compressed or encrypted format.

Program code may be implemented in programs executing on programmable machines such as mobile or stationary computers, tablets, laptops, desktop computers or hybrids, personal digital assistants, set top boxes, cellular telephones and pagers, consumer electronics devices (including DVD players, personal video recorders, personal video players, satellite receivers, stereo receivers, cable TV receivers), and other electronic devices, each including a processor, volatile and/or non-volatile memory readable by the processor, at least one input device and/or one or more output devices. Program code may be applied to the data entered using the input device to perform the described embodiments and to generate output information. The output information may be applied to one or more output devices. One of ordinary skill in the art may appreciate that embodiments of the disclosed subject matter can be practiced with various computer system configurations, including multiprocessor or multiple-core processor systems, minicomputers, mainframe computers, as well as pervasive or miniature computers or processors that may be embedded into virtually any device. Examples of the disclosed subject matter can also be practiced in distributed computing environments, cloud services, or ad hoc peer to peer networks where tasks or portions thereof may be performed by remote processing devices that are linked through a communications network.

Although operations may be described as a sequential process, some of the operations may in fact be performed in parallel, concurrently, and/or in a distributed environment, and with program code stored locally and/or remotely for access by single or multi-processor machines. In addition, in some examples of the present invention the order of operations may be rearranged. Program code may be used by or in conjunction with embedded controllers.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

While the subject matter herein has been described with reference to illustrative embodiments and examples, this description is not intended to be construed in a limiting sense. Various modifications of the illustrative embodiments, as well as other embodiments which are apparent to persons skilled in the art are deemed to lie within the scope of the appended claims.

The above description is intended to be illustrative, and not restrictive. For example, the above-described examples (or one or more aspects thereof) may be used in combination with each other. Other examples of the present invention may be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the claimed subject matter be determined with reference to the appended claims, along with the full scope of equivalents to which such claims are entitled.

## Claims

1. A system (100) for generating a dynamic content presentation, comprising:
a dynamic story creation module (203) coupled to a selection module (205), where the selection module is to track and record steps taken by an author in a process for selecting a dynamic element of the dynamic content presentation, and wherein metadata tags (27) are to be generated for each dynamic element with information corresponding to the tracked steps;
a dynamic contextual replacement module to selectively replace the dynamic element according to selection criteria and context criteria (207) stored in the metadata tag corresponding to a dynamic meta-object (25), the meta-object to enable dynamic presentation by collecting parameters expressed by the at least one metadata tag for use in identifying and replacing the dynamic element with a new element relevant to context of a viewer of the presentation, wherein the replacement module to replace the dynamic element corresponding to the dynamic meta-object in response to finding a broken link retrieving the dynamic element during playback; and
a metadata correlation module (209) to correlate the selection criteria used in the process for selecting the dynamic element with the metadata tags corresponding to the dynamic element and with the context criteria for replacing the dynamic element based on contextual information corresponding to the viewer, and further to generate a metadata tag package for the presentation, wherein the metadata tag package, comprising a metadata correlation of meta-objects and metadata tags, is a shorthand representation of the meta-object used for curating the broken link.

2. The system as recited in claim 1, wherein the metadata tag package is one of integrated within the presentation or generated as a separate data file.

3. The system as recited in claim 1, wherein the dynamic story creation module is one of custom presentation application; integrated with a legacy or common document creation application, Web browser, or online slideshow; an add-on to a Web browser, HTML5 framework, or Javascript script; or integrated as a dynamic link library (DLL) in a native operating system environment.

4. The system as recited in any of claims 1 to 3 wherein the dynamic contextual replacement module is configured to identify replacement criteria for updating a dynamic element with a more recent element even when viewer based contextual information is not specified.

5. The system as recited in claim 1, wherein the dynamic contextual replacement module is to embed contextual replacement criteria in the metadata tag corresponding to the dynamic element to be contextually replaced during playback.

6. The system as recited in claim 1, further comprising an agent to monitor for broken links found during playback and automatically notify the author of the broken links found, at a pre-selected periodicity.

7. The system as recited in claim 6, wherein the selection module is further configured to enable the author make a further selection for a replacement dynamic element where an original dynamic element has a broken link, wherein the selection module is to track steps corresponding to the further selection and record the steps corresponding to the further selection with the metadata tag associated with the original dynamic element in the presentation.

8. A method for generating a dynamic presentation, comprising:
tracking and recording steps taken by a user in selection of an element identified to be a dynamic element in a presentation;
generating at least one metadata tag corresponding to the tracked steps and the dynamic element;
selectively replacing the dynamic element according to selection criteria and context criteria stored in the metadata tag corresponding to a dynamic meta-object, the meta-object to enable dynamic presentation by collecting parameters expressed by the at least one metadata tag for use in identifying and replacing a the dynamic element with a new element relevant to context of a viewer of the presentation, wherein the replacing of the dynamic element corresponding to the dynamic meta-object is responsive to finding a broken link for the element during playback;
correlating the at least one metadata tag with the meta-object representing the dynamic element in the presentation, wherein the correlating comprises correlating the selection criteria used in the process for selecting the dynamic element with the metadata tags corresponding to the dynamic element and with the context criteria for replacing the dynamic element based on contextual information corresponding to the viewer; and
generating a metadata tag package from the correlated at least one metadata tag for the presentation,
wherein the metadata tag package is one of integrated within the presentation or generated as a separate data file;
and wherein the metadata tag package, comprising a metadata correlation of meta-objects and metadata tags, is a shorthand representation of the meta-object used for curating the broken link.

9. The method as recited in claim 8, further comprising:
repeating for at least one additional dynamic element the tracking and recording of steps, the generating of at least one additional metadata tag, and correlating the at least one additional metadata tag with an at least one additional meta-object representing the at least one additional dynamic element in the presentation; and
generating the metadata tag package to further include the at least one additional metadata tag for the presentation.

10. The method as recited in claim 8, wherein the metadata tag package further includes static elements.

11. The method as recited in claim 9, wherein the metadata tag comprises the tracked steps, an identified network location of the selected element, and criteria for replacement and/or curation of the dynamic element.

12. The method as recited in claim 8, further comprising:
notifying a user of broken links corresponding to at least one dynamic element in the presentation;
suggesting at least one replacement element for a dynamic element having a broken link; and
responsive to the user selecting one of the at least one replacement element, updating the metadata tag corresponding to the dynamic element to indicate the selection by the user.

13. At least one computer readable storage medium having instructions stored thereon, when the instructions are executed on a machine, cause the machine to perform the method as recited in any of claims 8 to 12.

14. An apparatus for playback of a dynamic presentation generated by a system of any of claims 1 to 7, comprising:
means for retrieving a presentation having static objects and dynamic meta-objects, wherein each dynamic meta-object corresponds to at least one metadata tag;
means for presenting static elements in the presentation to a user;
means for selectively replacing an element corresponding to each dynamic meta-object in the presentation according to information and criteria stored in the metadata tag corresponding to the dynamic meta-object; and
means for presenting one of the element corresponding dynamic meta-object or the selectively replaced dynamic element to the user during playback of the presentation,
wherein the replacing of an element corresponding to the dynamic meta-object is responsive to finding a broken link for the element during playback.

## Patentansprüche

1. System (100) zum Erzeugen einer dynamischen Inhaltspräsentation, umfassend:
ein dynamisches Geschichtenerstellungsmodul (203), das mit einem Auswahlmodul (205) gekoppelt ist, wobei das Auswahlmodul Schritte verfolgen und aufzeichnen soll, die von einem Autor in einem Prozess zum Auswählen eines dynamischen Elements der dynamischen Inhaltspräsentation durchgeführt werden, und wobei Metadaten-Tags (27) für jedes dynamische Element mit Informationen erzeugt werden sollen, die den verfolgten Schritten entsprechen;
ein dynamisches kontextbezogenes Ersatzmodul zum selektiven Ersetzen des dynamischen Elements gemäß Auswahlkriterien und Kontextkriterien (207), die in dem Metadaten-Tag, das einem dynamischen Metaobjekt (25) entspricht, gespeichert sind, wobei das Metaobjekt eine dynamische Präsentation durch Sammeln von Parametern ermöglicht, die durch das mindestens eine Metadaten-Tag zur Verwendung bei der Identifizierung und dem Ersetzen des dynamischen Elements durch ein neues Element, das für den Kontext eines Betrachters der Präsentation relevant ist, ausgedrückt werden, wobei das Ersatzmodul das dynamische Element, das dem dynamischen Metaobjekt entspricht, als Reaktion auf das Auffinden eines fehlerhaften Links beim Abrufen des dynamischen Elements während der Wiedergabe ersetzt; und
ein Metadaten-Korrelationsmodul (209), um die im Prozess verwendeten Auswahlkriterien zum Auswählen des dynamischen Elements mit den dem dynamischen Element entsprechenden Metadaten-Tags und mit den Kontextkriterien zum Ersetzen des dynamischen Elements basierend auf kontextuellen Informationen, die dem Betrachter entsprechen, zu korrelieren, und ferner um ein Metadaten-Tag-Paket für die Präsentation zu erzeugen, wobei das Metadaten-Tag-Paket, das eine Metadaten-Korrelation von Meta-Objekten und Metadaten-Tags umfasst, eine Kurzform des Metaobjekts ist, das zum Kuratieren des fehlerhaften Links verwendet wird.

2. System nach Anspruch 1, wobei das Metadaten-Tag-Paket entweder in die Präsentation integriert oder als separate Datendatei erzeugt ist.

3. System nach Anspruch 1, wobei das dynamische Geschichtenerstellungsmodul eine benutzerdefinierte Präsentationsanwendung ist; integriert mit einer älteren oder gemeinsamen Dokumentenerstellungsanwendung, einem Webbrowser oder einer Online-Diashow; ein Add-on zu einem Webbrowser, HTML5-Framework oder Javascript-Skript; oder integriert als eine dynamische Link-Bibliothek (DLL) in einer nativen Betriebssystemumgebung.

4. System nach einem der Ansprüche 1 bis 3, wobei das dynamische kontextbezogene Ersatzmodul zum Identifizieren von Ersetzungskriterien für die Aktualisierung eines dynamischen Elements mit einem neueren Element ausgelegt ist, auch wenn keine betrachterbezogenen kontextuellen Informationen angegeben sind.

5. System nach Anspruch 1, wobei das dynamische kontextuelle Ersatzmodul kontextuelle Ersetzungskriterien in das Metadaten-Tag einbetten soll, das dem dynamischen Element entspricht, das bei der Wiedergabe kontextuell ersetzt werden soll.

6. System nach Anspruch 1, ferner umfassend einen Agenten zum Überwachen auf während der Wiedergabe gefundene fehlerhafte Links und zum automatischen Benachrichtigen des Autors über die gefundenen fehlerhaften Links in einer vorgewählten Periodizität.

7. System nach Anspruch 6, wobei das Auswahlmodul ferner zum Ermöglichen einer weiteren Auswahl für ein dynamisches Ersatzelement durch den Autor ausgelegt ist, bei dem ein ursprüngliches dynamisches Element einen fehlerhaften Link aufweist, wobei das Auswahlmodul Schritte entsprechend der weiteren Auswahl verfolgen und die Schritte entsprechend der weiteren Auswahl mit dem dem ursprünglichen dynamischen Element in der Präsentation zugeordneten Metadaten-Tag aufzeichnen soll.

8. Verfahren zum Erzeugen einer dynamischen Präsentation, umfassend:
Verfolgen und Aufzeichnen von Schritten, die ein Benutzer bei der Auswahl eines Elements unternimmt, das als dynamisches Element in einer Präsentation identifiziert wurde;
Erzeugen mindestens eines Metadaten-Tags, das den verfolgten Schritten und dem dynamischen Element entspricht;
selektives Ersetzen des dynamischen Elements gemäß Auswahlkriterien und Kontextkriterien, die in dem Metadaten-Tag gespeichert sind, das einem dynamischen Metaobjekt entspricht, wobei das Metaobjekt eine dynamische Präsentation ermöglicht, indem es Parameter sammelt, die durch das mindestens eine Metadaten-Tag ausgedrückt werden, zur Verwendung bei der Identifizierung und dem Ersetzen eines dynamischen Elements durch ein neues Element, das für den Kontext eines Betrachters der Präsentation relevant ist, wobei das Ersetzen des dem dynamischen Metaobjekt entsprechenden dynamischen Elements auf das Finden eines fehlerhaften Links für das Element während der Wiedergabe reagiert;
Korrelieren des mindestens einen Metadaten-Tags mit dem Metaobjekt, das das dynamische Element in der Präsentation darstellt, wobei das Korrelieren das Korrelieren der im Prozess zur Auswahl des dynamischen Elements verwendeten Auswahlkriterien mit den dem dynamischen Element entsprechenden Metadaten-Tags und mit den Kontextkriterien zum Ersetzen des dynamischen Elements basierend auf Kontextinformationen, die dem Betrachter entsprechen, umfasst; und
Erzeugen eines Metadaten-Tag-Pakets aus dem korrelierten mindestens einen Metadaten-Tag für die Präsentation,
wobei das Metadaten-Tag-Paket entweder in die Präsentation integriert oder als separate Datendatei erzeugt ist;
und wobei das Metadaten-Tag-Paket, das eine Metadaten-Korrelation von Metaobjekten und Metadaten-Tags umfasst, eine Kurzform des Metaobjekts ist, das zum Kuratieren des fehlerhaften Links verwendet wird.

9. Verfahren nach Anspruch 8, ferner umfassend:
Wiederholen der Verfolgung und Aufzeichnung von Schritten für mindestens ein zusätzliches dynamisches Element, Erzeugen mindestens eines zusätzlichen Metadaten-Tags und Korrelieren des mindestens einen zusätzlichen Metadaten-Tags mit einem mindestens einen zusätzlichen Metaobjekt, das das mindestens eine zusätzliche dynamische Element in der Präsentation darstellt; und
Erzeugen des Metadaten-Tag-Pakets, um weiterhin das mindestens eine zusätzliche Metadaten-Tag für die Präsentation aufzunehmen.

10. Verfahren nach Anspruch 8, wobei das Metadaten-Tag-Paket ferner statische Elemente beinhaltet.

11. Verfahren nach Anspruch 9, wobei das Metadaten-Tag die verfolgten Schritte, einen identifizierten Netzwerkstandort des ausgewählten Elements und Kriterien für das Ersetzen und/oder Kuratieren des dynamischen Elements umfasst.

12. Verfahren nach Anspruch 8, ferner umfassend:
Benachrichtigen eines Benutzers über fehlerhafte Links, die mindestens einem dynamischen Element in der Präsentation entsprechen;
Vorschlagen mindestens eines Ersatzelements für ein dynamisches Element mit einem fehlerhaften Link; und
als Reaktion darauf, dass der Benutzer eines der mindestens einen Ersatzelemente auswählt, das das dem dynamischen Element entsprechende Metadaten-Tag aktualisiert, um die Auswahl durch den Benutzer anzuzeigen.

13. Mindestens ein computerlesbares Speichermedium mit darauf gespeicherten Anweisungen, die, wenn die Anweisungen auf einer Maschine ausgeführt werden, die Maschine dazu veranlassen, das Verfahren nach einem der Ansprüche 8 bis 12 durchzuführen.

14. Vorrichtung zur Wiedergabe einer dynamischen Präsentation, die von einem System nach einem der Ansprüche 1 bis 7 erzeugt wird, umfassend:
Mittel zum Abrufen einer Präsentation mit statischen Objekten und dynamischen Metaobjekten, wobei jedes dynamische Metaobjekt mindestens einem Metadaten-Tag entspricht;
Mittel zum Präsentieren statischer Elemente in der Präsentation für einen Benutzer;
Mittel zum selektiven Ersetzen eines Elements, das jedem dynamischen Metaobjekt in der Präsentation entspricht, gemäß Informationen und Kriterien, die in dem Metadaten-Tag gespeichert sind, das dem dynamischen Metaobjekt entspricht; und
Mittel zum Präsentieren eines der Elemente, die dem dynamischen Metaobjekt oder dem selektiv ersetzten dynamischen Element entsprechen, für den Benutzer während der Wiedergabe der Präsentation, wobei das Ersetzen eines Elements, das dem dynamischen Metaobjekt entspricht, auf das Finden eines fehlerhaften Links für das Element während der Wiedergabe reagiert.

## Revendications

1. Système (100) permettant de générer une présentation de contenu dynamique, comprenant :
un module de création d'histoire dynamique (203) couplé à un module de sélection (205), le module de sélection étant destiné à suivre et à enregistrer des étapes effectuées par un créateur dans un processus de sélection d'un élément dynamique de la présentation de contenu dynamique, et des étiquettes de métadonnées (27) devant être générées pour chaque élément dynamique avec des informations correspondant aux étapes suivies ;
un module de remplacement contextuel dynamique destiné à remplacer sélectivement l'élément dynamique selon des critères de sélection et des critères de contexte (207) stockés dans l'étiquette de métadonnées correspondant à un méta-objet dynamique (25), le méta-objet servant à permettre une présentation dynamique en collectant des paramètres exprimés par ladite étiquette de métadonnées destinés à être utilisés pour identifier et remplacer l'élément dynamique par un nouvel élément s'appliquant au contexte d'un spectateur de la présentation, le module de remplacement étant destiné à remplacer l'élément dynamique correspondant au méta-objet dynamique en réponse à la découverte d'un lien défectueux récupérant l'élément dynamique durant une lecture ; et
un module de corrélation de métadonnées (209) destiné à corréler les critères de sélection utilisés dans le processus de sélection de l'élément dynamique avec les étiquettes de métadonnées correspondant à l'élément dynamique et avec les critères de contexte pour remplacer l'élément dynamique sur la base d'informations contextuelles correspondant au spectateur, et en outre à générer un package d'étiquettes de métadonnées pour la présentation, le package d'étiquettes de métadonnées, comportant une corrélation de métadonnées de méta-objets et d'étiquettes de métadonnées, étant une représentation raccourcie du méta-objet utilisé pour réparer le lien défectueux.

2. Système selon la revendication 1, dans lequel le package d'étiquettes de métadonnées est intégré à l'intérieur de la présentation ou généré sous la forme d'un fichier de données séparé.

3. Système selon la revendication 1, dans lequel le module de création d'histoire dynamique est un élément parmi une application de présentation personnalisée ; intégré à une application de création de document commune ou patrimoniale, à un navigateur Web, ou à un diaporama en ligne ; une extension d'un navigateur Web, d'une infrastructure HTML5, ou d'un script Javascript ; ou intégré sous la forme d'une bibliothèque de liens dynamiques (DLL) dans un environnement de système d'exploitation natif.

4. Système selon l'une quelconque des revendications 1 à 3, dans lequel le module de remplacement contextuel dynamique est configuré pour identifier des critères de remplacement permettant de mettre à jour un élément dynamique avec un élément plus récent même lorsque des informations contextuelles basées spectateur ne sont pas spécifiées.

5. Système selon la revendication 1, dans lequel le module de remplacement contextuel dynamique est destiné à incorporer des critères de remplacement contextuel dans l'étiquette de métadonnées correspondant à l'élément dynamique devant être remplacé contextuellement durant une lecture.

6. Système selon la revendication 1, comprenant en outre un agent destiné à contrôler des liens défectueux trouvés durant une lecture et à notifier automatiquement au créateur les liens défectueux trouvés, à une périodicité présélectionnée.

7. Système selon la revendication 6, dans lequel le module de sélection est en outre configuré pour permettre au créateur de faire une autre sélection pour un élément dynamique de remplacement lorsqu'un élément dynamique original a un lien défectueux, le module de sélection étant destiné à suivre des étapes correspondant à l'autre sélection et à enregistrer les étapes correspondant à l'autre sélection avec l'étiquette de métadonnées associée à l'élément dynamique original dans la présentation.

8. Procédé permettant de générer une présentation dynamique, comprenant :
suivre et enregistrer des étapes effectuées par un utilisateur dans la sélection d'un élément identifié comme étant un élément dynamique dans une présentation ;
générer au moins une étiquette de métadonnées correspondant aux étapes suivies et à l'élément dynamique ;
remplacer sélectivement l'élément dynamique selon des critères de sélection et des critères de contexte stockés dans l'étiquette de métadonnées correspondant à un méta-objet dynamique, le méta-objet servant à permettre une présentation dynamique en collectant des paramètres exprimés par ladite étiquette de métadonnées destinés à être utilisés pour identifier et remplacer l'élément dynamique par un nouvel élément s'appliquant au contexte d'un spectateur de la présentation, le remplacement de l'élément dynamique correspondant au méta-objet dynamique répondant à la découverte d'un lien défectueux pour l'élément durant une lecture ;
corréler ladite étiquette de métadonnées avec le méta-objet représentant l'élément dynamique dans la présentation, l'étape de corrélation comprenant corréler les critères de sélection utilisés dans le processus de sélection de l'élément dynamique avec les étiquettes de métadonnées correspondant à l'élément dynamique et avec les critères de contexte pour remplacer l'élément dynamique sur la base d'informations contextuelles correspondant au spectateur ; et
générer un package d'étiquettes de métadonnées à partir de ladite étiquette de métadonnées corrélée pour la présentation,
le package d'étiquettes de métadonnées étant intégré à l'intérieur de la présentation ou généré sous la forme d'un fichier de données séparé ;
et le package d'étiquettes de métadonnées, comportant une corrélation de métadonnées de méta-objets et d'étiquettes de métadonnées, étant une représentation raccourcie du méta-objet utilisé pour réparer le lien défectueux.

9. Procédé selon la revendication 8, comprenant en outre :
répéter pour au moins un élément dynamique additionnel le suivi et l'enregistrement des étapes, l'étape de génération d'au moins une étiquette de métadonnées additionnelle, et l'étape de corrélation de ladite étiquette de métadonnées additionnelle avec un au moins un méta-objet additionnel représentant ledit élément dynamique additionnel dans la présentation ; et
générer le package d'étiquettes de métadonnées pour inclure en outre ladite étiquette de métadonnées additionnelle pour la présentation.

10. Procédé selon la revendication 8, dans lequel le package d'étiquettes de métadonnées comprend en outre des éléments statiques.

11. Procédé selon la revendication 9, dans lequel l'étiquette de métadonnées comprend les étapes suivies, un emplacement de réseau identifié de l'élément sélectionné, et des critères pour le remplacement et/ou la réparation de l'élément dynamique.

12. Procédé selon la revendication 8, comprenant en outre :
notifier à un utilisateur les liens défectueux correspondant à au moins un élément dynamique dans la présentation ;
suggérer au moins un élément de remplacement pour un élément dynamique ayant un lien défectueux ; et
en réponse à la sélection, par l'utilisateur, d'un dudit élément de remplacement, mettre à jour l'étiquette de métadonnées correspondant à l'élément dynamique pour indiquer la sélection par l'utilisateur.

13. Au moins un support de stockage lisible par ordinateur stockant des instructions qui, lorsqu'elles sont exécutées sur une machine, amènent la machine à mettre en oeuvre le procédé de l'une quelconque des revendications 8 à 12.

14. Appareil permettant une lecture d'une présentation dynamique générée par un système de l'une quelconque des revendications 1 à 7, comprenant :
des moyens destinés à récupérer une présentation ayant des objets statiques et des méta-objets dynamiques, chaque méta-objet dynamique correspondant à au moins une étiquette de métadonnées ;
des moyens destinés à présenter des éléments statiques dans la présentation à un utilisateur ;
des moyens destinés à remplacer sélectivement un élément correspondant à chaque méta-objet dynamique dans la présentation selon des informations et des critères stockés dans l'étiquette de métadonnées correspondant au méta-objet dynamique ; et
des moyens destinés à présenter l'élément correspondant au méta-objet dynamique ou l'élément dynamique remplacé sélectivement à l'utilisateur durant une lecture de la présentation,
le remplacement d'un élément correspondant au méta-objet dynamique répondant à la découverte d'un lien défectueux pour l'élément durant une lecture.
